# EUROPEAN PATENT SPECIFICATION

(11) **EP 3 571 561 B1**
(45) Date of publication and mention of the grant of the patent: **02.03.2022**
(21) Application number: 18741402.4
(22) Date of filing: 09.01.2018
(51) Int. Cl.: G05D 1/02, A01D 75/18, A01D 75/20, A47L 9/28, F16P 3/12, A01D 34/00

(54) **IMPROVED WORK SCHEDULING FOR A ROBOTIC LAWNMOWER**
VERBESSERTE ARBEITSABLAUFPLANUNG FÜR EINEN ROBOTERRASENMÄHER
PROGRAMME DE TRAVAIL AMÉLIORÉ POUR TONDEUSE À GAZON ROBOTISÉE

(30) Priority: 19.01.2017 SE 1750043
(43) Date of publication of application: 27.11.2019
(60) Divisional application: 21215222.7
(73) Proprietor: Husqvarna AB, 561 82 Huskvarna (SE)
(72) Inventor: KAMFORS, Mattias, 554 48 Jönköping (SE); ÖHRLUND, Magnus, 570 21 Malmbäck (SE)
(86) International application number: PCT/SE2018/050011
(87) International publication number: WO 2018/135988

(56) References cited:
- EP-A2- 1 411 450
- EP-A2- 2 945 037
- WO-A1-2014/027945
- US-A1- 2005 288 079
- US-A1- 2009 043 440
- US-A1- 2009 198 380
- US-A1- 2010 234 998
- US-A1- 2012 265 391
- US-A1- 2013 192 183
- US-A1- 2013 238 130
- US-A1- 2015 250 372
- US-A1- 2016 062 345
- US-A1- 2016 157 422
- US-A1- 2016 282 862

## Description

### TECHNICAL FIELD

This application relates to robotic lawnmowers and in particular to a system and a method for performing improved scheduling of work to be performed by a robotic lawnmower.

### BACKGROUND

Automated or robotic lawnmowers are becoming increasingly more popular. In a typical deployment, a work area, such as a garden, is enclosed by a boundary cable with the purpose of keeping the robotic lawnmower inside the work area. The robotic lawnmower is typically configured to work in a random pattern inside the work area. As such, it does not take into account whether it is disturbing the other inhabitants or persons occupying the work area.

Prior art models have been proposed where the robotic lawnmower is designed to perform its work according to a schedule. The schedule may be set by a user or it may be set dynamically depending on different weather reports or situations.

Prior art models have also been proposed that schedule its work to different sections of the work area so that it can keep track of which sections have been serviced. This is beneficial for short operation sessions, as it would be practically impossible to mow or service the complete work area in a short time slot when operating in a random fashion, but possible to do so in a smaller area or section.

However, as will be discussed in the below, the inventors have realized problems with these traditional manners of scheduling the robotic lawnmower's work.

Prior art models have also been proposed that are able to detect an imminent collision with an object, either through a range finder or even possibly a camera used to detect an object in the path of the robotic lawnmower and then act as when detecting a collision and simply change the heading of the robotic lawnmower. One example of such a system is given in the international patent application published as WO 2014/027945 Al where there is presented a method for processing object detection-related information may include receiving information indicative of an encounter between a robotic vehicle and an object responsive to communication received from a sensor of the robotic vehicle while the robotic vehicle transits a parcel, determining a location of the robotic vehicle at a time corresponding to occurrence of the encounter, determining whether the location corresponds to a location associated with a known object associated with the parcel, and classifying the object as an unknown object based on the location not corresponding to the location associated with the known object. However, such models may still be annoying to its surroundings and may still accidentally collide with moving objects.

Thus, there is a need for improved scheduling of a robotic lawnmower's work.

### SUMMARY

As will be disclosed in detail in the detailed description, the inventors have realized that the traditional manner of scheduling the robotic lawnmower's work brings about at least two problems. It is therefore an object of the teachings of this application to overcome or at least reduce those problems by providing robotic lawnmower system comprising a charging station, a living object sensor and a robotic lawnmower configured to operate within a work area according to an operating schedule, the robotic lawnmower being configured to detect and identify an object as a living object; and adapt the operating schedule accordingly,

It is also an object of the teachings of this application to overcome the problems by providing a method for use in a robotic lawnmower system comprising a charging station, a living object sensor and a robotic lawnmower configured to operate within a work area according to an operating schedule, the method comprising detecting and identifying an object as a living object; and adapting the operating schedule accordingly.

Thus, the scheduling may be improved to also include very short time slots, and by performing the work when there is no human activity in the work area, or at least not close to where the robotic lawnmower is sent to operate.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1A shows an example of a robotic lawnmower according to one embodiment of the teachings herein;
Figure 1B shows a schematic view of the components of an example of a robotic lawnmower according to one embodiment of the teachings herein;
Figure 2 shows an example of a robotic lawnmower system (200) according to the teachings herein;
Figure 3 shows a schematic overview of a robotic lawnmower system, such as that in figure 2, in which a robotic lawnmower is configured to detect living object(s) and adapt its operating schedule according to the teachings herein;
Figure 4 shows a schematic overview of a robotic lawnmower system, such as that in figure 2 or 3, in which a robotic lawnmower is configured to detect living object(s) and adapt its operating schedule according to the teachings herein; and
Figure 5 shows a corresponding flowchart for a method according to an example embodiment.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

It should be noted that all indications of rotational speeds, time durations, work loads, battery levels, operational levels etc. are given as examples and may be varied in many different ways as would be apparent to a skilled person. The variations may be for individual entities as well as for groups of entities and may be absolute or relative,

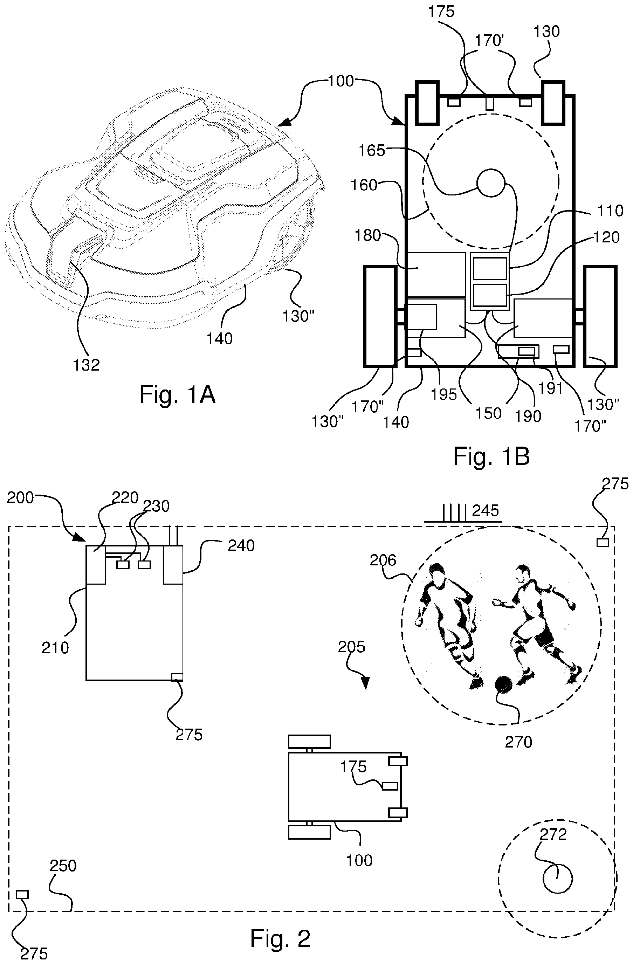

Figure 1A shows a perspective view of a robotic lawnmower 100, having a body 140 and a plurality of wheels 130 (only one shown). As can be seen, the robotic lawnmower 100 may comprise charging skids for contacting contact plates (not shown in figure 1, but referenced 230 in figure 2) when docking into a charging station (not shown in figure 1, but referenced 210 in figure 2) for receiving a charging current through, and possibly also for transferring information by means of electrical communication between the charging station and the robotic lawnmower 100.

Figure 1B shows a schematic overview of the robotic lawnmower 100, having a body 140 and a plurality of wheels 130.

In the exemplary embodiment of figure 1B the robotic lawnmower 100 has 4 wheels 130, two front wheels 130' and the rear wheels 130". At least some of the wheels 130 are drivably connected to at least one electric motor 150. It should be noted that even if the description herein is focused on electric motors, combustion engines may alternatively be used possibly in combination with an electric motor.

In the example of figure 1B, each of the rear wheels 130" is connected to a respective electric motor 150, This allows for driving the rear wheels 1 30" independently of one another which, for example, enables steep turning.

The robotic lawnmower 100 also comprises a controller 110. The controller 110 may be implemented using instructions that enable hardware functionality, for example, by using executable computer program instructions in a general-purpose or special-purpose processor that may be stored on a computer readable storage medium (disk, memory etc) 120 to be executed by such a processor. The controller 110 is configured to read instructions from the memory 120 and execute these instructions to control the operation of the robotic lawnmower 1 00 including, but not being limited to, the propulsion of the robotic lawnmower. The controller 110 may be implemented using any suitable, publically available processor or Programmable Logic Circuit (PLC). The memory 120 may be implemented using any commonly known technology for computer-readable memories such as ROM, RAM, SRAM, DRAM, FLASH, DDR, SDRAM or some other memory technology.

The robotic lawnmower 100 may further have at least one sensor 170; in the example of figure 1 there are four sensors divided into a first sensor pair 170' and a second sensor pair 170", respectively arranged at each wheel 130', 130" to detect a magnetic field (not shown) and for detecting a boundary cable and/or for receiving (and possibly also sending) information from a signal generator (will be discussed with reference to figure 2). The sensors 170 may thus be arranged as front sensors 170' and rear sensors 170".

In some embodiments, the sensors 170 may be connected to the controller 110, and the controller 110 may be configured to process and evaluate any signals received from the sensor pairs 170, 170'. The sensor signals may be caused by the magnetic field being generated by a control signal being transmitted through a boundary cable. This enables the controller 110 to determine whether the robotic lawnmower 100 is close to or crossing a boundary cable, or inside or outside an area enclosed by the boundary cable. This also enables the robotic lawnmower 100 to receive (and possibly send) information from the control signal.

The robotic lawnmower 100 also comprises a grass cutting device 160, such as a rotating blade 160 driven by a cutter motor 165. The grass cutting device being an example of a work tool 160 for a robotic lawnmower 100. The cutter motor 165 is connected to the controller 110 which enables the controller 110 to control the operation of the cutter motor 165. The controller may also be configured to determine the load exerted on the rotating blade, by for example measure the power delivered to the cutter motor 165 or by measuring the axle torque exerted by the rotating blade. The robotic lawnmower 100 also has (at least) one battery 180 for providing power to the motors 150 and the cutter motor 165.

The robotic lawnmower 100 may further comprise at least one supplemental navigation sensor 195, such as a deduced reckoning navigation sensor for providing signals for deduced reckoning navigation, also referred to as dead reckoning. Examples of such deduced reckoning navigation sensor(s) 195 are odometers and compasses. The supplemental navigation sensor may also or alternatively be implemented as a vision navigation system, or Ultra Wide Band radio navigation system to mention a few examples. The supplemental sensor 195 will hereafter be exemplified through the deduced reckoning sensor.

The robotic lawnmower 100 may also or alternatively comprise a satellite navigation sensor, such as a Global Positioning System (GPS) device 190, or a GLONASS device.

Using the navigation sensors 190, 195 the robotic lawnmower may be configured to navigate the work area using stored coordinates. The coordinates for the work area, may be stored in the form of a map of the work area (referenced 205 in figure 2). Such a map may include information on obstacles (referenced 272 in figure 2). The robotic lawnmower may thus be arranged to navigate the work area in a precise manner using the navigation sensors 190, 195 and the map, thereby also being able to service different portions of the work area.

In one embodiment, the map or the work area may be divided into segments, and the robotic lawnmower may then be configured to service or operate in a segment at a time. The scheduling of such a robotic lawnmower involves planning which segment is serviced at what time.

In one embodiment, the robotic lawmnower is configured to navigate the work area based on the navigation sensors 190, 195 without utilizing a boundary cable, or using the boundary cable only as an emergency fall back, should the other navigation sensors fail. The boundary cable is as such not an essential part of the robotic lawnmower system,

The robotic lawnmower 100 may further be arranged with a wireless communication interface 191 for communicating with other devices, such as a server, a personal computer or smartphone, or the charging station. Examples of such wireless communication devices are Bluetooth^{™}, Global System Mobile (GSM) and LTE (Long Term Evolution), to name a few.

The robotic lawnmower 100 also comprises a living object sensor 175 for sensing the presence of a living object, such as a human 270 or an animal. The living object sensor may be a single sensor, or it may be a combination of sensors, possibly being of different types.

The living object sensor 175 comprises a camera for registering at least one image (possibly being a video stream), and based on this at least one image identify the presence of any living objects, such as humans or animals. The robotic lawnmower is thus configured to detect and identify a living object, such as a human or animal through image analysis. Since image analysis is generally known and the exact details of the analysis is not at the core of this invention, no further details will be given on this matter. The same holds for tracking an object through image analysis, which the robotic lawnmower may also be configured to do. In one embodiment, the robotic lawnmower is configured to determine that a living object has moved as an alternative to actually and continuously tracking the object.

The living object sensor 175 is also configured to identify a tracked or detected object to be indeed a living object by differentiating the living object from innate objects, such as lawn furniture, being an example of stationary objects, and balls and lawn maintenance equipment being examples of moving innate objects,

The living object sensor may be configured to identify a tracked or detected object to be a living object by detecting a parameter of the objects, such as a shape, a color, a face, a movement pattern, a sound recording of a sound print to mention a few examples, and comparing the parameter to stored or otherwise predefined reference parameters. The reference parameters may be stored locally in a memory or remotely in a server or web service. The reference parameter may be prestored or it may be updated or stored during the operation of the robotic lawnmower. In one such embodiment, the robotic lawnmower may be configured to repeatedly detect and thereby learn to recognize a living object frequently visiting the work area. The living object sensor may also be configured to record an object as being a living object by storing a photograph or other recording of at least one parameter for that object,

For the purpose of this application a living object is considered to be a human (or animal, such as a pet) that should be protected from any annoyance and or danger proposed by the robotic lawnmower. It is not simply a moving object (such as a windmill) nor is it a stationary object, As the living object is not only to be protected from injury but also from being disturbed, special requirements need to be taken in to consideration, such as determining the speed of the living object and adapting the size of the non-working area accordingly. For a higher speed, a greater non-working area should be defined. More on this later on.

As has been discussed and will be discussed, the actual operations of the living object sensor 175 may be performed (at least in part) by the living object sensor 175 in combination with the controller 110 of the robotic lawnmower 100.

The robotic lawnmower is thus configured to determine that a detected object is a living object, possibly by comparing a parameter of the detected object to a reference parameter.

The living object sensor 175 may also comprise capacitance sensor, a hum or ripple sensor, ultrasonic sensor, RFID (Radio Frequency ID) sensor, cellular communication sensor or an InfraRed sensor.

One type of sensor is a sound sensor for registering at least one sound clip and based on the at least one sound clip, identify the presence of a living object, possibly by comparing the recorded sound clip to a library of known sounds made by various living objects. The robotic lawnmower is thus configured to detect and identify a living object, such as a human or animal through sound analysis. Since sound analysis is generally known and the exact details of the analysis is not at the core of this invention, no further details will be given on this matter.

It should be pointed out that the sensor in combination with the controller of the robotic lawnmower 100 or another controller of the robotic lawnmower system, is configured to not only detect a living object, but to identify the object as being a living object. Such analysis may be done by detecting an object, compare the object's shape to known shapes of living objects (humans, animals) and to determine that the object is moving and/or making sounds, said sounds possibly being associated with behaviours of living objects. This allows the robotic lawnmower to differentiate between stationary objects looking like living objects (such as teddy bears, other toys or statues). This also allows the robotic lawnmower to differentiate living objects from other moving objects such as washing hanging out to dry or flags.

The living object sensor 175 in combination with the controller, may alternatively or additionally be used to identify previously known or defined objects, living or not, and to adapt the operation accordingly.

Figure 2 shows a schematic view of a robotic lawnmower system 200 in one embodiment. The schematic view is not to scale. The robotic lawnmower system 200 comprises a charging station 210 and a boundary cable 250 arranged to enclose a work area 205, in which the robotic lawnmower 100 is supposed to serve.

As with figure 1, the robotic lawnmower is exemplified by a robotic lawnmower, but the teachings herein may also be applied to other robotic lawnmowers adapted to operate within a work area.

The charging station may have a base plate 215 for enabling the robotic lawnmower to enter the charging station in a clean environment and for providing stability to the charging station 210.

The charging station 210 has a charger 220, in this embodiment coupled to two charging plates 230. The charging plates 230 are arranged to co-operate with corresponding charging plates (not shown) of the robotic lawnmower 100 for charging the battery 180 of the robotic lawnmower 100.

The charging station 210 also has, or may be coupled to, a signal generator 240 for providing a control signal 245 to be transmitted through the boundary cable 250. The signal generator thus comprises a controller for generating the control signal. The control signal 245 comprises an alternating current, such as a continuously or regularly repeated current signal. The control signal may be a CDMA signal (CDMA - Code Division Multiple Access). The control signal may also or alternatively be a pulsed control signal, the control signal thus comprising one or more current pulses being transmitted periodically. The control signal may also or alternatively be a continuous sinusoidal wave. As is known in the art, the current signal will generate a magnetic field around the boundary cable 250 which the sensors 170 of the robotic lawnmower 100 will detect. As the robotic lawnmower 100 (or more accurately, the sensor 170) crosses the boundary cable 250 the direction of the magnetic field will change, The robotic lawnmower 100 will thus be able to determine that the boundary cable has been crossed, and take appropriate action by controlling the driving of the rear wheels 1 30" to cause the robotic lawnmower 100 to turn a certain angular amount and return into the work area 205. For its operation within the work area 205, in the embodiment of figure 2, the robotic lawnmower 100 may alternatively or additionally use the satellite navigation device 190, supported by the deduced reckoning navigation sensor 195 to navigate the work area 205.

Additionally, the robotic lawnmower 100 may use the satellite navigation device 190 to remain within and map the work area 205 by comparing the successive determined positions of the robotic lawnmower 100 against a set of geographical coordinates defining the boundary 250, obstacles, keep-out areas etc of the work area 205. This set of boundary defining positions may be stored in the memory 120, and/or included in a digital (virtual) map of the work area 205. The boundary 250 of the work area 205 may also be marked by a boundary cable supplementing the GNSS navigation to ensure that the robotic lawnmower stays within the work area, even when no satellite signals are received.

In one embodiment, the living object sensor is arranged on the charging station 210 or at another location in or adjacent the work area 205. Such sensors are indicated in figure 2 as reference 275.

In one embodiment, the robotic lawnmower 100 is configured to receive sensor information from the remote sensors 275. In one such embodiment, the robotic lawnmower 100 is configured to receive sensor information to be processed or already processed sensor information for adapting the operating schedule accordingly. In one such embodiment, the robotic lawnmower 100 is configured to receive processed sensor information in the form of an adapted operating schedule.

In one embodiment, the operating schedule is a simple schedule of simply random operation, wherein the adaptation is simply to remove the robotic lawnmower from the identified living object.

As can be seen in figure 2, there is one example of a non-living - or at least stationary or permanent - object exemplified as a tree (trunk) 272. There is also an example of living object(s) 270, playing football (soccer).

According to the invention the robotic lawnmower 100 is configured to detect the presence of living objects 270 utilizing the living object sensor 175, In one embodiment, the robotic lawnmower is also configured to determine the location, or at least the approximate location, for the living object(s) 270.

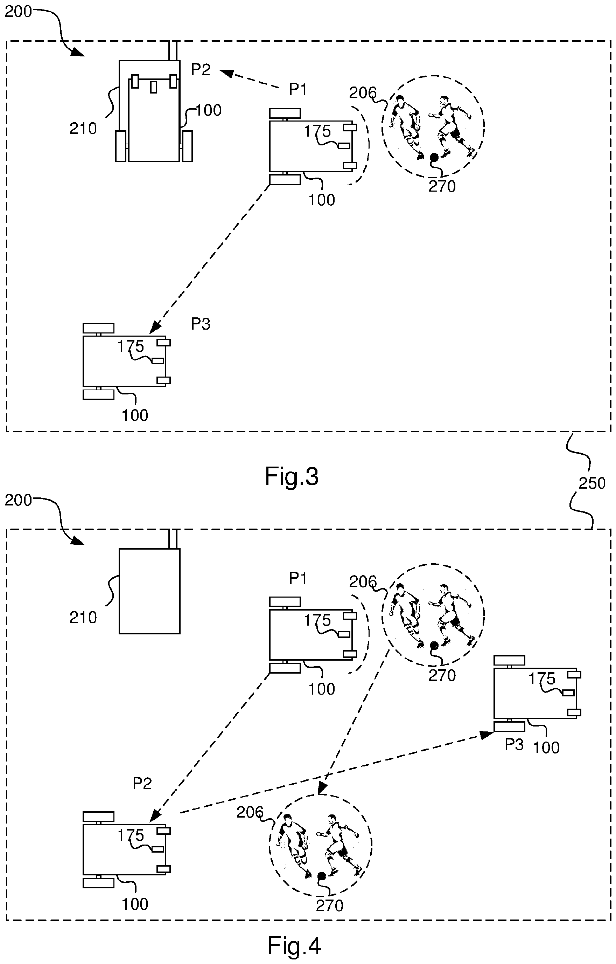

Figure 3 shows a schematic view of the operation of a robotic lawnmower 100 according to one embodiment.

As the presence of living object(s) 270 is detected at position P1 (as is indicated by the dashed curved line), the robotic lawnmower 1 00 is configured to adapt its operating schedule accordingly.

The operating schedule may be a simple one that simply allows the robotic lawnmower to operate when it is charged and only returning to the charging station 210 to recharge. The operating schedule may also be more advanced, operating according to a weekly schedule, time of day, calendar or other such schedules. The operating schedule may also work based on sensors such as weather sensors, and/or work sensors (such as sensors for determining the height of cut grass).

One manner of adapting the work schedule as a living object(s) is detected is to interrupt the operation and possibly return the robotic lawnmower to the charging station 210, as in position P2. The operation may then resume as it is detected that no living object is detected anymore. The operation may also or alternatively he resumed at the next scheduled work session (such as when fully charged or any of the manners exemplified above).

In one embodiment, the robotic lawnmower 100 is configured to note the position or location of the living object(s) 270 and define a non-working area 206 around the location of the living object(s) 270. Such an area may be defined according to the image analysis thus having a size adapted to the extension of the living object(s) 270. Such an area may also be defined according to a determined speed of the living object, where a higher speed results in a larger area. Such an area 206 may also be given a fixed or standard size (for example 10 meters radius). The non-working area 206 may also be defined as an already defined sub area of the work area, the sub area at least partially overlapping the location of the living objects 270.

The defined non-working area is thus defined - as in generated - based on the living object and is not a simple predefined work area that is being marked as occupied. Such predefined areas suffer from that they are not adapted to the living object and may not be of an adequate size. Also, a living object may be close to the edge of a predefined area, and thus be disturbed by a robotic lawnmower coming close that edge. The present invention does not suffer from such disadvantages.

In one such embodiment, the robotic lawnmower may be configured to adapt its operating schedule by (temporarily) excluding the non-working area 206 from its intended or allowed work area 205.

In one such embodiment the robotic lawnmower 100 is thus configured to operate even though living object(s) 270 are detected within the work area 205, but staying away from the living object(s) 270 so that the living object(s) is not disturbed, such as operating by point P3. The distance kept to the living object corresponds to the size of the non-working area 206.

In one embodiment the robotic lawnmower 100 may be configured to track the living object(s) 270 and adapt the location of the non-working area 206 according to the movements of the living object(s) 270, so that the non-working area 206 overlaps the location of the living object(s).

In one embodiment the robotic lawnmower 100 is configured to continuously scan the work area 205 or more beneficially, the non-working area 206, to determine whether living object(s) 270 is still present or not, and if it is determined that no living object(s) 270 is present, adapt its operation accordingly by initiating a new work session.

Figure 4 shows a schematic overview of a robotic lawnmower system (200) according to herein where the robotic lawnmower 100 is configured to detect a living object(s) 270 at point P1, to adapt its operating schedule by moving to operate at point P2, and to track the movements of the living object(s) 270 coming close to point P2 and adapt the operating schedule by moving to point P3. Alternatively, figure 4 shows the situation where the robotic lawnmower detects the presence of living object(s), adapts its operating schedule by moving away and then again detects that the living object(s) 270 in its vicinity and again adapts the operating schedule by moving to point P3.

In one embodiment the robotic lawnmower 100 is configured to return to the non-working area 206 as its operation is resumed, and to scan the non-working area 206 using the living object sensor 175 to determine whether the living object(s) is still present or not.

The robotic lawnmower 100 of the present invention is thus enabled to, through the use of a camera (and possibly other sensors) detect and track objects, identifying them as being living objects, and to make sure that the living object is not disturbed by the operation of the robotic lawnmower, by staying away from the general vicinity of the living object and/or by running in a silent mode when operating close to the vicinity of the living object. A living object here being assumed to be a human or a (pet) animal.

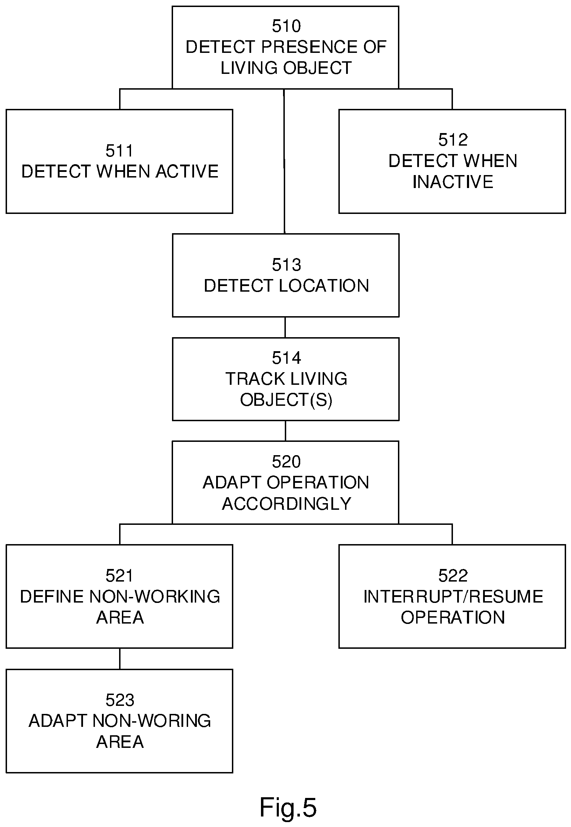

Figure 5 shows a flowchart for a general method according to herein where the robotic lawnmower 100 is configured to detect the presence of living object(s) 510 and adapt its operation accordingly 520.

The robotic lawnmower 100 may be configured to detect the presence of living object(s) continuously or at intervals while working 511, i.e when being active.

The robotic lawnmower 100 may alternatively or additionally be configured to detect the presence of living object(s) continuously or at intervals while being in the charging station 512 or otherwise having paused its operation, i.e. when being inactive.

The robotic lawnmower 100 may alternatively or additionally be configured to determine the location of detected living object(s) 270 513 and adapt its working operation accordingly, by defining 521 a non-working area 206 and adapting its operation by staying out of the non-working area 206, or by (simply) turning away from the detected living object(s) 270. Alternatively, the operation is adapted by interrupting the operation 522, or, if it is detected that no living object(s) is present when the robotic lawnmower 100 is inactive, resuming operation

The robotic lawnmower 100 may alternatively or additionally be configured to track 514 the detected living objects and adapt 514 the operation of the robotic lawnmower 100 accordingly, such as by adapting (expanding or moving) 523 a non-working area 206.

In one embodiment of a robotic lawnmower according to the teachings herein, the operating schedule relates to the time when the robotic lawnmower operates.

In one embodiment of a robotic lawnmower according to the teachings herein, the operating schedule relates to the area where the robotic lawnmower operates. The scheduled operating area may be given as coordinates in a map. The scheduled operating area may also or alternatively be given as one or more segments of a work area 205.

In one embodiment of a robotic lawnmower according to the teachings herein, the operating schedule relates to the time when the robotic lawnmower operates and to the area where the robotic lawnmower operates.

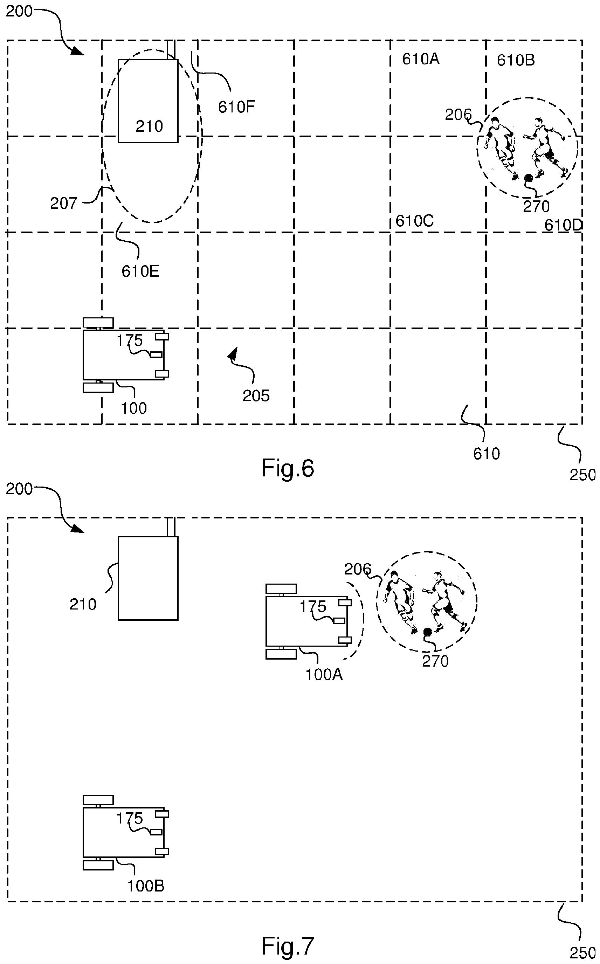

Figure 6 shows a schematic overview of a robotic lawnmower system 200 according to the teachings herein. As can be seen the work area 205 is divided into segments 610. The size, distribution, number and placing of the segments 610 is only for illustrative purposes and it should be understood that many alternatives exist.

Assuming that the robotic lawnmower 100 has detected the presence of the living objects 207 and defined a keep out area 206, it may be configured to define the keep out area 206 to correspond to the overlapping segments 610A, 610B, 610C and 610D. For an operating schedule based on segments, the keep out area 206 may thus be defined as the segment(s) in which the living object(s) 270 is/are detected.

In one embodiment, the robotic lawnmower may also be configured to define a safe area 207. In one example embodiment, the safe area is the area around or surrounding the charging station 210. For an operating schedule based on segments, the safe area 207 may thus be defined as the segment(s) 610E, 610F in which the charging station 210 is located,

A safe area is defined as an area where the robotic lawnmower is allowed to operate, or at least move, even if living objects are detected therein. This to ensure that the robotic lawnmower is able to reach its charging or other servicing station. In one embodiment, the robotic lawnmower is configured to adapt its operating schedule by turning off the grass cutter when operating in a safe area 207 if a living objects is detected therein. The remaining segments 610 thus constitute the current allowed work area 205.

In one embodiment, the controller is configured to adapt the operating schedule by changing the time that the robotic lawnmower is to operate.

In one embodiment, the controller is configured to adapt the operating schedule by changing the area, such as a segment or an area given by map coordinates, that the robotic lawnmower is to operate in.

In one embodiment, the controller is configured to adapt the operating schedule by changing the time that the robotic lawnmower is to operate in an area, such as a segment or an area given by map coordinates.

In one embodiment, the controller is configured to adapt the operating schedule by operating the robotic lawnmower in a silent mode as a living object is detected. In such an embodiment, the robotic lawnmower may be adapted so that it does not interfere or bother any nearby human activities.

Figure 7 shows an example embodiment of a robotic lawnmower system 200 according to the teachings herein, where the system comprises more than one robotic lawnmower 100, such as a first robotic lawnmower 100A and a second robotic lawnmower 100B.

In such an embodiment, the first robotic lawnmower may be configured to communicate to the second robotic lawnmower, either directly through a communication interface or indirectly through the charging station or a server, that a living object 270 has been detected and where. The second robotic lawnmower 100B may be configured to receive information that a living object 270 has been detected and where, either directly from the first robotic lawnmower 100A through a communication interface or indirectly through the charging station or a server, and adapt its operating schedule accordingly.

In one embodiment, the robotic lawnmower 100 is configured to determine where a living object 270 has been detected and adapt its operating schedule accordingly by determining the non-working area 206. In one embodiment, the robotic lawnmower 100 is configured to adapt its operating schedule accordingly by receiving information of a non-working area 206 or, alternatively, receiving information of an allowed working area, from a server or another robotic lawnmower 100.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A robotic lawnmower system (200) comprising a charging station (210) and a robotic lawnmower (100) configured to operate within a work area according to an operating schedule, the robotic lawnmower (100) comprising a living object sensor (175) comprising a camera (175), and a controller (110) being configured to:
detect and identify an object as a living object (270) utilizing the living object sensor (175) through image analysis; and
adapt the operating schedule accordingly, by
determining a location for the living object (270),
defining a non-working area (206) overlapping the location of the living object (270) and adapting the operating schedule by operating outside the non-working area (206), wherein the robotic lawnmower is further configured to determine that the living object (270) has moved by tracking the living object and adapt the non-working area (206) accordingly.

2. The robotic lawnmower system (200) according to claim 1, wherein the robotic lawnmower is further configured to adapt the operating schedule by interrupting the operation if the living object is detected and identified during an active period of the robotic lawnmower (100).

3. The robotic lawnmower system (200) according to claim 1 or 2, wherein the robotic lawnmower is further configured to adapt the operating schedule by resuming the operation if the living object is detected and identified during an inactive period of the robotic lawnmower (100).

4. The robotic lawnmower system (200) according to any previous claim,
wherein the robotic lawnmower is further configured to continuously or at intervals scan for a living object (270).

5. The robotic lawnmower system (200) according to any previous claim,
wherein the robotic lawnmower is further configured to adapt the operating schedule by operating the robotic lawnmower in a silent mode.

6. The robotic lawnmower system (200) according to any previous claim,
wherein the robotic lawnmower is further configured to adapt its operating schedule by turning off a grass cutter when operating in a safe area if a living object is detected therein.

7. The robotic lawnmower system (200) according to any previous claim,
wherein the robotic lawnmower is further configured to adapt the operating schedule by changing the time that the robotic lawnmower is to operate.

8. The robotic lawnmower system (200) according to any previous claim,
wherein the robotic lawnmower is further configured to adapt the operating schedule by changing the area, such as a segment or an area given by map coordinates, that the robotic lawnmower is to operate in.

9. The robotic lawnmower system (200) according to any previous claim,
wherein the robotic lawnmower is further configured to adapt the operating schedule by changing the time that the robotic lawnmower is to operate in an area, such as a segment or an area given by map coordinates.

10. The robotic lawnmower system (200) according to any previous claim,
wherein the robotic lawnmower is further configured to identify previously known or defined objects utilizing the controller and the living object sensor (175) and adapt the operation accordingly.

11. The robotic lawnmower system (200) according to any previous claim,
wherein the system comprises a first robotic lawnmower (100A) and a second robotic lawnmower (100B).

12. The robotic lawnmower system (200) according to claim 12, wherein the first robotic lawnmower (100A) is configured to communicate to the second robotic lawnmower (100B) that a living object (270) has been detected and where.

13. The robotic lawnmower system (200) according to claim 12 or 13,
wherein the second robotic lawnmower (100B) is configured to receive information that a living object (270) has been detected and where from the first robotic lawnmower (100A) and adapt its operating schedule accordingly.

14. A method for use in a robotic lawnmower system (200) comprising a charging station (210) and a robotic lawnmower (100) configured to operate within a work area according to an operating schedule, the robotic lawnmower (100) comprising a living object sensor (175) comprising a camera (175), the method comprising
detecting and identifying an object as a living object (270) utilizing the living object sensor (175) through image analysis; and
adapting the operating schedule accordingly, by
determining a location for the living object (270),
defining a non-working area (206) overlapping the location of the living object (270),
adapting the operating schedule by operating outside the non-working area (206), and
determining that the living object (270) has moved by tracking the living object and adapting the non-working area (206) accordingly.

## Patentansprüche

1. Roboterrasenmähersystem (200), das eine Ladestation (210) und einen Roboterrasenmäher (100) umfasst, der dazu ausgelegt ist, gemäß einem Betriebsplan in einem Arbeitsbereich betrieben zu werden, wobei der Roboterrasenmäher (100) einen Lebendobjektsensor (175), der eine Kamera (175) umfasst, und eine Steuerung (110) umfasst, die zu Folgendem ausgelegt ist:
Detektieren und Identifizieren eines Objekts als ein lebendes Objekt (270) unter Verwendung des Lebendobjektsensors (175) über eine Bildanalyse und
entsprechendes Anpassen des Betriebsplans durch Bestimmen eines Ortes für das lebende Objekt (270), Definieren eines Nichtarbeitsbereichs (206), der den Ort des lebenden Objekts (270) überlappt, und Anpassen des Betriebsplans durch Betreiben außerhalb des Nichtarbeitsbereichs (206), wobei der Roboterrasenmäher ferner dazu ausgelegt ist, durch Verfolgen des lebenden Objekts und entsprechendes Anpassen des Nichtarbeitsbereichs (206) zu bestimmen, dass sich das lebende Objekt (270) bewegt hat.

2. Roboterrasenmähersystem (200) nach Anspruch 1, wobei der Roboterrasenmäher ferner dazu ausgelegt ist, den Betriebsplan durch Unterbrechen des Betriebs anzupassen, wenn das lebende Objekt während einer aktiven Periode des Roboterrasenmähers (100) detektiert und identifiziert wird.

3. Roboterrasenmähersystem (200) nach Anspruch 1 oder 2, wobei der Roboterrasenmäher ferner dazu ausgelegt ist, den Betriebsplan durch Wiederaufnehmen des Betriebs anzupassen, wenn das lebende Objekt während einer inaktiven Periode des Roboterrasenmähers (100) detektiert und identifiziert wird.

4. Roboterrasenmähersystem (200) nach einem der vorhergehenden Ansprüche, wobei der Roboterrasenmäher ferner dazu ausgelegt ist, kontinuierlich oder in Intervallen auf ein lebendes Objekt (270) zu scannen.

5. Roboterrasenmähersystem (200) nach einem der vorhergehenden Ansprüche, wobei der Roboterrasenmäher ferner dazu ausgelegt ist, den Betriebsplan durch Betreiben des Roboterrasenmähers in einem leisen Modus anzupassen.

6. Roboterrasenmähersystem (200) nach einem der vorhergehenden Ansprüche, wobei der Roboterrasenmäher ferner dazu ausgelegt ist, seinen Betriebsplan durch Ausschalten eines Grasschneiders anzupassen, wenn er in einem sicheren Bereich betrieben wird, wenn darin ein lebendes Objekt detektiert wird.

7. Roboterrasenmähersystem (200) nach einem der vorhergehenden Ansprüche, wobei der Roboterrasenmäher ferner dazu ausgelegt ist, den Betriebsplan durch Ändern der Zeit, zu der der Roboterrasenmäher zu betreiben ist, anzupassen.

8. Roboterrasenmähersystem (200) nach einem der vorhergehenden Ansprüche, wobei der Roboterrasenmäher ferner dazu ausgelegt ist, den Betriebsplan durch Ändern des Bereichs, wie etwa eines Segments oder eines Bereichs, das bzw. der durch Kartenkoordinaten angegeben ist, in dem der Roboterrasenmäher betrieben werden soll, anzupassen.

9. Roboterrasenmähersystem (200) nach einem der vorhergehenden Ansprüche, wobei der Roboterrasenmäher ferner dazu ausgelegt ist, den Betriebsplan durch Ändern der Zeit, zu der der Roboterrasenmäher in einem Bereich, wie etwa einem Segment oder einem Bereich, das bzw. der durch Kartenkoordinaten angegeben ist, zu betreiben ist, anzupassen.

10. Roboterrasenmähersystem (200) nach einem der vorhergehenden Ansprüche, wobei der Roboterrasenmäher ferner dazu ausgelegt ist, unter Verwendung der Steuerung und des Lebendobjektsensors (175) zuvor bekannte oder definierte Objekte zu identifizieren und den Betrieb entsprechend anzupassen.

11. Roboterrasenmähersystem (200) nach einem der vorhergehenden Ansprüche, wobei das System einen ersten Roboterrasenmäher (100A) und einen zweiten Roboterrasenmäher (100B) umfasst.

12. Roboterrasenmähersystem (200) nach Anspruch 12, wobei der erste Roboterrasenmäher (100A) dazu ausgelegt ist, dem zweiten Roboterrasenmäher (100B) zu kommunizieren, dass und wo ein lebendes Objekt (270) detektiert wurde.

13. Roboterrasenmähersystem (200) nach Anspruch 12 oder 13, wobei der zweite Roboterrasenmäher (100B) dazu ausgelegt ist, vom ersten Roboterrasenmäher (100A) Informationen darüber zu empfangen, dass und wo ein lebendes Objekt (270) detektiert wurde, und seinen Betriebsplan entsprechend anzupassen.

14. Verfahren zur Verwendung in einem Roboterrasenmähersystem (200), das eine Ladestation (210) und einen Roboterrasenmäher (100) umfasst, der dazu ausgelegt ist, gemäß einem Betriebsplan in einem Arbeitsbereich betrieben zu werden, wobei der Roboterrasenmäher (100) einen Lebendobjektsensor (175) umfasst, der eine Kamera (175) umfasst, wobei das Verfahren Folgendes umfasst
Detektieren und Identifizieren eines Objekts als ein lebendes Objekt (270) unter Verwendung des Lebendobjektsensors (175) über eine Bildanalyse und entsprechendes Anpassen des Betriebsplans durch Bestimmen eines Ortes für das lebende Objekt (270), Definieren eines Nichtarbeitsbereichs (206), der den Ort des lebenden Objekts (270) überlappt,
Anpassen des Betriebsplans durch Betreiben außerhalb des Nichtarbeitsbereichs (206) und
Bestimmen durch Verfolgen des lebenden Objekts, dass sich das lebende Objekt (270) bewegt hat, und entsprechendes Anpassen des Nichtarbeitsbereichs (206).

## Revendications

1. Système de tondeuse à gazon robotisée (200) comprenant une station de charge (210) et une tondeuse à gazon robotisée (100) configurée pour fonctionner dans une zone opérationnelle selon un programme de fonctionnement, la tondeuse à gazon robotisée (100) comprenant un capteur d'objet vivant (175) comprenant une caméra (175), et un contrôleur (110) configuré pour :
détecter et identifier un objet en tant qu'objet vivant (270) à l'aide du capteur d'objet vivant (175) par analyse d'images ; et
adapter le programme de fonctionnement en conséquence, en
déterminant un emplacement de l'objet vivant (270),
définissant une zone non opérationnelle (206) qui chevauche l'emplacement de l'objet vivant (270) et adaptant le programme de fonctionnement en opérant en dehors de la zone non fonctionnelle (206), la tondeuse à gazon robotisée étant en outre configurée pour déterminer que l'objet vivant (270) s'est déplacé en suivant l'objet vivant et adapter la zone opérationnelle (206) en conséquence.

2. Système de tondeuse à gazon robotisée (200) selon la revendication 1, dans lequel la tondeuse à gazon robotisée est en outre configurée pour adapter le programme de fonctionnement en interrompant son fonctionnement si l'objet vivant est détecté et identifié pendant une période active de la tondeuse à gazon robotisée (100).

3. Système de tondeuse à gazon robotisée (200) selon la revendication 1 ou 2, dans lequel la tondeuse à gazon robotisée est en outre configurée pour adapter le programme de fonctionnement en reprenant son fonctionnement si l'objet vivant est détecté et identifié pendant une période inactive de la tondeuse à gazon robotisée (100).

4. Système de tondeuse à gazon robotisée (200) selon n'importe quelle revendication antérieure, dans lequel la tondeuse à gazon robotisée est en outre configurée pour rechercher en continu ou à intervalles réguliers un objet vivant (270).

5. Système de tondeuse à gazon robotisée (200) selon n'importe quelle revendication antérieure, dans lequel la tondeuse à gazon robotisée est en outre configurée pour adapter le programme de fonctionnement en faisant fonctionner la tondeuse à gazon robotisée en mode silencieux.

6. Système de tondeuse à gazon robotisée (200) selon n'importe quelle revendication précédente,
dans lequel la tondeuse à gazon robotisée est en outre configurée pour adapter son programme de fonctionnement en désactivant un coupe-herbe lorsqu'elle fonctionne dans une zone sûre si un obstacle vivant y est détecté.

7. Système de tondeuse à gazon robotisée (200) selon n'importe quelle revendication précédente, dans lequel la tondeuse à gazon robotisée est en outre configurée pour adapter le programme de fonctionnement en modifiant l'heure à laquelle la tondeuse à gazon robotisée doit fonctionner.

8. Système de tondeuse à gazon robotisée (200) selon n'importe quelle revendication précédente, dans lequel la tondeuse à gazon robotisée est en outre configurée pour adapter le programme de fonctionnement en modifiant la zone, telle qu'un segment ou une zone indiqué par des coordonnées cartographiques, dans laquelle la tondeuse à gazon robotisée doit fonctionner.

9. Système de tondeuse à gazon robotisée (200) selon n'importe quelle revendication précédente, dans lequel la tondeuse à gazon robotisée est en outre configurée pour adapter le programme de fonctionnement en modifiant l'heure à laquelle la tondeuse à gazon robotisée doit fonctionner dans une zone, telle qu'un segment ou une zone indiqué par des coordonnées cartographiques.

10. Système de tondeuse à gazon robotisée (200) selon n'importe quelle revendication précédente, dans lequel la tondeuse à gazon robotisée est en outre configurée pour identifier des objets précédemment connus ou définis à l'aide du contrôleur et du capteur d'objet vivant (175) et adapter le fonctionnement en conséquence.

11. Système de tondeuse à gazon robotisée (200) selon n'importe quelle revendication précédente, le système comprenant une première tondeuse à gazon robotisée (100A) et une seconde tondeuse à gazon robotisée (100B).

12. Système de tondeuse à gazon robotisée (200) selon la revendication 12, dans lequel la première tondeuse à gazon robotisée (100A) est configurée pour communiquer à la seconde tondeuse robotisée (100B) qu'un objet vivant (270) a été détecté et où.

13. Système de tondeuse à gazon robotisée (200) selon la revendication 12 ou 13, dans lequel la seconde tondeuse robotisée (100B) est configurée pour recevoir à partir de la première tondeuse robotisée (100A) l'information qu'un objet vivant (270) a été détecté et où et adapter son programme de fonctionnement en conséquence.

14. Procédé destiné à être utilisé dans un système de tondeuse à gazon robotisée (200) comprenant une station de charge (210) et une tondeuse à gazon robotisée (100) configurée pour fonctionner dans une zone opérationnelle selon un programme de fonctionnement, la tondeuse à gazon robotisée (100) comprenant un capteur d'objet vivant (175) comprenant une caméra (175), le procédé comprenant
la détection et l'identification d'un objet en tant qu'objet vivant (270) à l'aide du capteur d'objet vivant (175) par analyse d'images ; et
adapter le programme de fonctionnement en conséquence, en
déterminant l'emplacement de l'objet vivant (270),
définissant une zone non fonctionnelle (206) qui chevauche l'emplacement de l'objet vivant (270),
adaptant le programme de fonctionnement en opérant à l'extérieur de la zone non opérationnelle (206), et
déterminant que l'objet vivant (270) s'est déplacé en suivant l'objet vivant et adaptant la zone non fonctionnelle (206) en conséquence.
